# EUROPEAN PATENT SPECIFICATION

(11) **EP 1 627 438 B1**
(45) Date of publication and mention of the grant of the patent: **15.04.2009**
(21) Application number: 04732999.0
(22) Date of filing: 14.05.2004
(51) Int. Cl.: H01M 4/22

(54) **METHOD FOR FORMING LEAD-ACID BATTERIES AND PLANT FOR IMPLEMENTING SAID METHOD.**
VERFAHREN ZUR HERSTELLUNG VON BLEIBATTERIEN UND ANLAGE ZUR IMPLEMENTIERUNG DES VERFAHRENS
PROCEDE DE REALISATION DE BATTERIES AU PLOMB-ACIDE ET INSTALLATION DE MISE EN OEUVRE DU PROCEDE

(30) Priority: 16.05.2003 IT VI20030099
(43) Date of publication of application: 22.02.2006
(73) Proprietor: Stocchiero, Franco, 36050 Montorso Vicentino (VI) (IT)
(72) Inventor: Stocchiero, Franco, 36050 Montorso Vicentino (VI) (IT)
(74) Representative: Bonini, Ercole
(86) International application number: PCT/EP2004/050805
(87) International publication number: WO 2004/102691

(56) References cited:
- SE-B- 441 403
- US-A- 3 166 447
- US-A- 4 475 990
- PATENT ABSTRACTS OF JAPAN vol. 2000, no. 03, 30 March 2000 (2000-03-30) -& JP 11 354149 A (YUASA CORP), 24 December 1999 (1999-12-24)

## Description

This invention concerns a rapid method for forming lead-acid batteries, of the type used mainly, but not only, to start thermal engines.

An important stage in the process for manufacturing lead-acid batteries is the sa-called "forming" of the plates, where the battery's discharging and recharging reactions take place due to the electrochemical conversion of the active matter they contain, which transforms the chemical energy into electrical energy and vice versa.

When they are manufactured, the plates are inert, or inactive; to make them active, the plates are submitted to a forming procedure that transforms the inactive lead oxide and lead sulfate into metallic lead and lead dioxide, which are the active constituents of the negative and positive polarity plates, respectively.

Forming consists essentially in submitting plates of opposite polarity to a charging procedure with a direct electric current in a solution of sulfuric acid diluted with water (the electrolyte) and this can be done before or after assembling the plates in the battery.

In the former case, we speak of forming in the tank, in the latter of forming in the case.

In practice, forming in the case is used to form the engine starter batteries - and generally for all small batteries, regardless of their application - mainly to contain costs.

A preferred method involves filling the batteries with a diluted electrolyte, completing the forming process, then removing and replacing the forming electrolyte, which will have become more concentrated, filling the battery once again with an electrolyte at a concentration very similar to the one used in the battery's operation.

This method is also called "forming in the case with two acids" to distinguish it from the method using one acid, where the forming electrolyte used is more concentrated so that, by the end of the forming process, it reaches the right concentration for the battery's operation, thereby simplifying the process.

Technology has always made efforts to accelerate the forming process and the only effective way to do so is to increase the charging current in order to reduce the forming time for the same amount of electric energy delivered to transform the inactive into active masses.

There is a limit, however, to how much the current can be increased, imposed by the ability of the plates (especially the positive plate) to withstand the forming charge, and particularly the increase in temperature induced by the heat generated by the exothermal reactions in the forming process and the Joule effect caused by the flow of current.

A particularly large amount of heat is generated during the forming of starter batteries "in the case" because of the high ratio of the mass of lead oxides that have to be transformed from inactive into active with respect to the amount of forming electrolyte in the battery.

The state of the art has attempted to overcome the problem by using special oxide formulations for the positive plate and using very diluted forming acids, opting for forming with two acids to improve plate formability and resorting to even sophisticated cooling systems to control the increase in temperature during the forming process.

Even so, forming times have been unable to drop below 12-15 hours.

Another problem relating to battery forming concerns the hydrogen generated together with the oxygen due to electrolysis of the water in the forming acid electrolyte, especially towards the end of the process.

The hydrogen that develops not only entrains acid mists that are hazardous to health, in combination with the oxygen in the air above a certain concentration it can generate detonating mixtures.

This poses safety problems that make it necessary to adopt fume extraction and abatement systems, the size of which would have to be adapted, in the case of accelerated forming processes, to dispose of the larger quantities of hydrogen and acid mist due to the higher forming current involved.

A known method for effectively dissipating the heat generated during the forming process involves circulating the diluted forming electrolyte through a pipe from an outside tank to the battery and vice versa, so that the electrolyte can be cooled and its increase in concentration corrected by further diluting it with water to the required concentration.

Using this sort of method, an acid at the concentration needed for the battery's operation is added at the end of the forming process, thereby achieving a continuous "two-acids" process that ultimately produces finished batteries charged and ready for use.

Such a forming process with two acids in circulation is described in the Swedish Patent application SE-7701184-9 - Publication no. 441403, submitted by the YUASA company.

This document fails to mention the safety problem posed by the hydrogen generated during the forming process.

The first aim of the present invention is to design a forming process with two acids in circulation in which the hydrogen and the related acid mists are disposed of in conditions of total safety.

Sine ideal forming conditions, especially for the positive plate, demand a temperature between 40 and 60°C, it is important to ensure that the electrolyte is kept constantly at the right temperature throughout the forming process, and not just cooled.

The second aim of the present invention is consequently to develop a system for circulating the forming electrolyte in which not only its concentration, but also its temperature are kept stable at a given setting.

Moreover, it is desirable for the forming electrolyte to always be freshly prepared, so as to avoid any build-up of impurities that may derive from its repeated use in successive formations.

So, another aim of the present invention is to provide a system that enables the diluted electrolyte used in the first forming process to be used to prepare the more concentrated working electrolyte used for the second charge, which remains inside the battery, so that each finished battery, charged and ready for use, contains its "own" forming electrolyte.

When the battery is in use, i.e. when it is being discharged, the sulfuric acid in the electrolyte is "fixed" by the positive and negative plates in the form of lead sulfate, with a consequent progressive reduction in the concentration of the electrolyte.

If the active masses of the plates are oversized with respect to the amount of sulfuric acid in the battery, discharging can continue until the concentration of the electrolyte becomes similar to that of water.

In these conditions, the solubility of the lead sulfate in the plates increases, so it dissolves in the electrolyte, albeit in small quantities.

During subsequent recharging, the lead sulfate precipitates again because its solubility diminishes due to the increasing concentration of the electrolyte.

The lead sulfate that consequently builds up on the microporous separator, placed between the positive and negative plates to ensure their electrical insulation, is converted into metallic lead during charging.

This makes the separator electronically conductive, so it short-circuits the plates of opposite polarity and the battery becomes useless.

This risk exists particularly in modem starter batteries, where the amount of electrolyte, and consequently of sulfuric acid, is stoichiometrically inadequate for the quantities of the plates' active masses.

To overcome this problem, it is common practice to include certain additives in the battery's electrolyte.

These additives are mainly soluble alkaline sulfates, that reduce the solubility of the lead sulfate when the electrolyte is very diluted.

The additive naturally represents an additional cost, as does the procedure required for its dosage.

Another aim of the present invention is therefore to provide a method for the automatic in situ production and dosage of additives for the electrolyte used in the forming process, starting from inexpensive raw materials.

Another important aim of the invention is to speed up the process of starter battery forming using two acids in circulation, optimizing the batteries performance, reducing the cost of the process and complying with environmental and safety requirements.

The above-specified aims, and others that will be better illustrated in the following pages, are achieved by a method for forming lead-acid batteries that, as stated in the first claim, comprises the following steps:
- collecting a first electrolyte, comprising a water solution of sulfuric acid at a given concentration and at an essentially constant preset temperature from a first tank through at least one first pipe;
- distributing said first electrolyte to one or more batteries by means of one ore more distributors complete with distribution channels, each of them connected to each of said batteries;
- circulating said first electrolyte continuously inside said batteries at a predetermined and substantially constant concentration and temperature for a given time, said first electrolyte entering and exiting through openings provided in said batteries, or battery cells, and returning to said first tank, level-detector devices having been provided to ensure a constant level inside each battery during said circulation;
- powering said batteries with a direct current while said first electrolyte is circulating for a given forming time;
- stopping the circulation of said first electrolyte from said first tank to said batteries and
- circulating a second electrolyte for a further present time, said second electrolyte being kept at a predetermined and substantially constant ot concentration and temperature and being collected from a second tank and comprising a solution of sulfuric acid and water, the concentration of which being different from that of the first electrolyte;
- powering said batteries with a direct current while said second electrolytes is circulating for a preset mixing charge time.

One of the advantages of the method described in this invention is that, while the first electrolyte, comprising a water solution of sulfuric acid at a lower concentration than that of the second electrolyte, is circulating, it is kept at a constant concentration and temperature throughout the battery forming time.

Since it is common knowledge that the electrochemical reaction occurring inside the battery during forming involves the production of heat, the temperature of the circulating electrolyte tends to rise and its concentration obviously changes.

The fact that the method in this invention includes keeping the first electrolyte at a constant concentration and temperature while it is in circulation offers an obvious advantage in that the intensity of the current can be kept higher, throughout the forming process with the first electrolyte, than when the known technique is used, the known technique having to keep the current lower to avoid harmful overheating phenomena in the battery and the deterioration of the plates being formed.

The same applies to the second circulation with the second electrolyte, which is a water solution of sulfuric acid in a greater concentration than in the first electrolyte.

Here again, the temperature and concentration of the circulating electrolyte are kept constant, at a preset value, throughout the time it takes to perform the second mixing charge.

In essence, the constant temperature of the electrolyte on the one hand enables a faster forming process because higher charging currents can be used, since the heat generated is dissipated by cooling the electrolyte; on the other hand, a substantially identical forming of each battery, and a consequently similar performance of the batteries, is assured by the constant concentration of the electrolyte in both the first forming stage and the second mixing charge stage, thanks to a continuous re-titering of the electrolyte.

Moreover, the more diluted electrolyte used in the first forming charge is prepared by diluting with water the more concentrated electrolyte needed for the second mixing charge, which is drawn from the second storage tank, so that the mixing electrolyte is continuously being used up to prepare the first, more diluted electrolyte used for the initial forming charge, thereby avoiding the accumulation of the second electrolyte in its storage tank and ensuring its continual renewal.

The more concentrated electrolyte is also prepared by diluting with water an even more concentrated electrolyte, typically but not necessarily coinciding with the one used in the active mass production processes.

This particular, more concentrated electrolyte is treated with alkaline hydroxide additives in quantities sufficient to partially neutralize its sulfuric acid content in order to produce alkaline sulfates that will consequently be contained in the battery, at the end of the forming process, in the concentration needed to suppress the lead sulfate's solubility, so as to protect the battery against the risk of short circuits in the event it undergoes deep discharges.

The invention also concerns the plant for implementing the above-illustrated battery forming method.

Further characteristics and features of the invention behind the described forming method will become apparent in the description of a preferred form of implementation of the method object of the invention, given only as an illustrative and not restrictive example, and illustrated in the attached drawings, wherein:
- Fig. 1 shows a layout of the plant for circulating the first electrolyte according to the method of this invention;
- Fig. 2 shows the layout of the plant in Fig. 1 when the second electrolyte, which is more concentrated than the first, is circulated;
- Fig. 3 shows a schematic view of the connections between the batteries and the battery forming plant

Table 1 gives an example of the forming process carried out according to the method of the present invention, showing the process parameters and the performance of the batteries formed using said parameters.

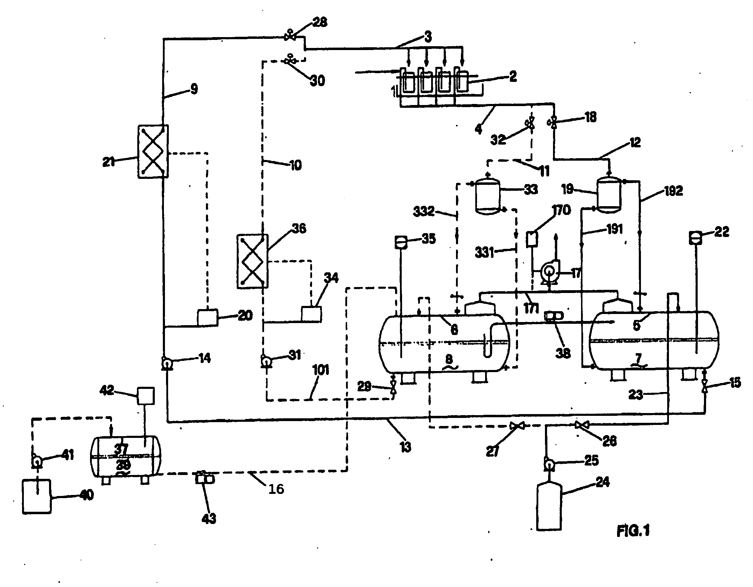

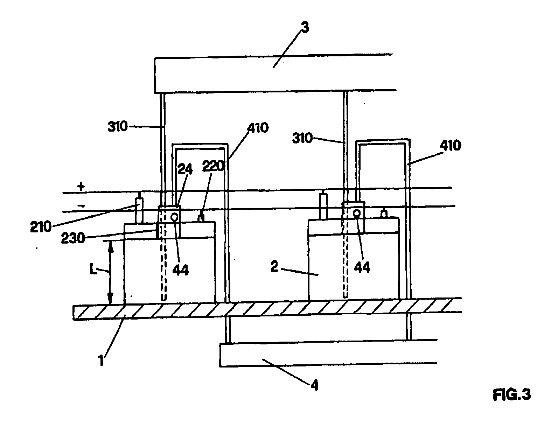

With reference to Fig. **1** and Fig. **3****,** a bench, Indicated as a whole by **1.** is used to support a number of batteries **2** that need to undergo the forming process.

Each of said batteries **Z** has at least one positive pole terminal **210** and at least one negative pole terminal **220** that are connected to the forming plant's busbars for the delivery of a direct current

There is also a hole **230** where a plug **240** of known type is inserted, complete with a self-leveling device with two conduits, one for the delivery and one for the return of the circulating electrolyte.

All the batteries are connected in series, the positive and negative terminals in series being attached by means of connectors to two busbars, one positive and one negative, for carrying the direct electrical current.

The electrolyte is delivered to each battery through a delivery pipe **310** connected to the distributor pipe **3,** while the electrolyte returns through a return pipe **410** connected to the collector pipe **4.**

The distributor pipe **3** and the collector pipe 4 are connected to the tanks **5** and **6** containing the electrolytes **7** and **8,** respectively.

To be more precise, the distributor pipe **3** is connected to the feed piping **9** and **13** when the circulating electrolyte is the electrolyte **7** contained in the tank **5**, or to the feed piping **10** and **101** when the circulating electrolyte is the electrolyte **8** contained in the tank **6**.

As for the collector pipe **4,** this is connected to the piping **12** or **11,** depending on whether the circulating electrolyte is the first electrolyte **7** or the second electrolyte **8.**

During the first stage of the process for forming the battery **2,** the first electrolyte **7,** consisting of a water solution of sulfuric add at a certain concentration lower than that of the second electrolyte **8,** is collected from the first tank **5** and, through the valve **15** and the piping **13,** and with the aid of the pump **14,** it reaches the distributor pipe **3,** from where it is distributed through the delivery tubes **310** to each battery.

The electrolyte **7** it kept circulating by means of the electric fan **17**, which creates a negative pressure In the tank **5** and **6** because its intake is connected to the piping **171** which is in communication with the two tanks.

Since the tanks **5** and **6** are in communication with the collector pipe **4,** the negative pressure created by the electric fan **17** ensures a constant and continual intake of the electrolyte by the batteries being formed.

Each of the batteries **2** is fitted with a leveling device of known type that enables the electrolyte being fed to the batteries to reach a certain level L and not to exceed said level for all the time during which the electrolyte is in circulation.

In each battery **2.** the first electrolyte **7** reaches the level L, then exits through the pipe **4** and enters the liquid-gas separator **19** through the valve **18** and the piping **12.**

The liquid phase collects on the bottom of the separator and, through the piping **191,** reaches the bottom of the first tank **5.**

The gaseous phase, which contains hydrogen, is drawn off through the piping **192** at the top of the separator and arrives to the top of the first tank **5**, from where it is extracted by the electric fan **17** through the piping **171.**

This first circulation continues for a preset time, during which the batteries are charged with a given current.

As mentioned earlier, the electrochemical phenomena occurring inside the batteries **2** during the charge produce an increase in the temperature of the electrolyte **7.**

A temperature sensor **20,** situated in the piping **9** that delivers the electrolyte **7.** picks up the signal relating to the temperature of the electrolyte **7.**

This sensor is connected to the heat exchanger **21,** which is enabled when the sensor **20** records a temperature variation with respect to a preset value, thus providing the cooling or heating capacity needed to restore the electrolyte **7** to the required temperature.

The electrolyte **7** is also kept at a constant preset concentration, controlled by means of a densimeter **22** placed in the tank **5.**

The sulfuric acid generated during the plate forming process increases the concentration and consequently also the density of the electrolyte **7,** which thus departs from the established setting.

Demineralized water is consequently delivered to the first tank **5** through the pipe **23** from the tank **24** by means of the pump **25** and the valve **26,** which opens for the time necessary to restore the correct concentration of the electrolyte **7.**

After completing the forming charge according to the established time settings and current conditions, during which time the first electrolyte **7** has circulated at the established temperature and concentration, the second electrolyte **8,** which is more concentrated than the first electrolyte 7, begins to circulate.

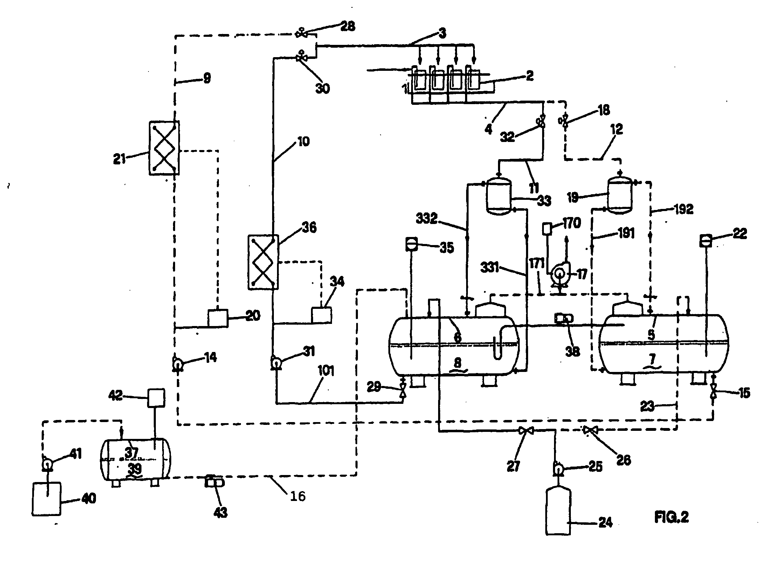

For this purpose, as shown in Fig. **2****,** the valves **15** and **28** close to cut off the circulation of the first electrolyte **7,** and the valves **29** and **30** open on the tank **6** containing the second electrolyte **8.**

This electrolyte **8** is delivered to the batteries **2** by the pump **31,** and returns to the second tank **6** through the pipe **4** and the valve **32,** after liquid-gas separation in the separator **33.**

in this separator **33**, in the same way as in the separator **19,** the liquid is collected and returned to the tank **6** through the piping **331,** while the gas passes through the piping **332** and reaches the top of the tank **6,** from where it can be extracted by the electric fan **17** through the piping **171.** x

Here again, the temperature and concentration of the second electrolyte **8** are measured respectively by the temperature sensor **34** situated on the delivery piping **10** and by the densimeter **35**.

The temperature is corrected in the heat exchanger **36,** which is controlled by the signal sent out by the temperature sensor **34.**

In the case of our example, the exchanger **36** is distinct from the exchanger **21.**

In other plant design solutions, a single heat exchanger may be used for both the first and the second electrolyte.

The concentration is corrected by adding preferably demineralized water from the tank **24** to the tank **6,** through the valve **27** and the pump **25** controlled by the signal coming from the densimeter **35.**

During this phase, called the mixing phase, the first electrolyte **7** contained in the batteries **2** is replaced by the second, more concentrated electrolyte **8,** that becomes mixed with the first electrolyte **7** to produce an electrolyte at the working concentration established for the battery.

To facilitate the achievement of the working concentration throughout the battery, the batteries continue to be charged during mixing, but at a lower current rating.

All the above operations are managed by a programming and control device that is not illustrated in the figure, such as a computer controlling a CPU.

It is clear from the above description that the batteries being formed are submitted to a forced circulation of the two electrolytes **7** and **8,** each at controlled and constant temperature and concentration, throughout the forming charge and the mixing charge.

The process as described guarantees a homogeneous charging of all the batteries and consequently their constant performance levels.

Moreover, temperature control of the circulating electrolyte throughout the forming cycle enables higher forming currents to be used, with a consequent reduction in the forming times which can be reduced by as much as 75%.

The methods for preparing the electrolytes **7** and **8** at the required concentrations differ significantly.

The first, more diluted electrolyte **7** is obtained starting from the second electrolyte **8** and diluting it with demineralized water.

For this purpose, as we can see in Fig. **1****,** the pump **38** transfers the second electrolyte **8** from the tank **6** to the tank **5,** while the water for its dilution is collected from the tank **24** through the pump **25** and the valve **26**.

The process for preparing the first electrolyte **7** is governed by the densimeter **22**.

The second electrolyte **8** in the tank **6,** which is more concentrated than the first electrolyte **7,** is prepared in the second tank **6** starting from a third electrolyte **39,** more concentrated than either **8** or **7,** contained in a third tank **37,** from where it is sent to the tank **6** by the pump **43.**

The water for diluting the electrolyte is drawn from the tank **24.**

This demineralized water reaches the tank 6 via the pump **25** and the valve **27** and the process for preparing the second electrolyte **8** is governed by the densimerter **35**.

As already mentioned, it is useful for the battery's electrolyte to contain salts, mainly soluble sulfates, to prevent the onset of short circuits in the battery when it is recharged after being deeply discharged.

The method of this invention consequently includes adding these soluble sulfates to the electrolyte **8.**

For this purpose, the alkaline hydroxide contained in a fourth tank **40** is drawn off by the pump **41** and added to the tank **37** before the third electrolyte **39** flows into the second tank **6** through the piping **16,** where it is diluted to produce the second electrolyte **8.**

The amount of alkaline hydroxide added to the sulfuric acid is controlled by measuring the density of the electrolyte in the tank **37** using the densimeter **42**.

The gaseous phase extracted by the electric fan **17** contains hydrogen below its x explosion threshold in air because it is diluted in each of the pipes **410** connected to the collector pipe **4,** each of which has an opening **44** that allows for the intake of sufficient volumes of air.

The concentration of the hydrogen is recorded at the inlet to the piping **171** using a known device **170.**

If the maximum allowable value for the concentration of hydrogen in the gaseous phase extracted by the electric fan **17** is exceeded, the charging process is x automatically stopped, and the same applies in the event of any failure of the electric fan **17.**

**Table 1 compares the initial capacities of two identical starter batteries formed respectively by circulating the electrolyte according to the method described above and using a conventional system.**

| Rated battery capacity C20 (Ah) | Forming method | Time (hours) | Charge (Ah) | Charge (Ah/kg m.a. +) | 1^{st} discharge at C20 factor (% rated) | 2^{nd} discharge at C20 factor (% rated) | 3^{rd} discharge at C20 factor (% rated) |
|---|---|---|---|---|---|---|---|
| 62 | Circulating electrolyte | 5 | 309 | 550 | 87 | 94 | 99 |
| 62 | Conventional | 20 | 309 | 550 | 90 | 95 | 99 |

For the same amount of energy delivered during the forming cycle, the batteries demonstrate equivalent initial performance levels, based on their 20-hour capacity after being discharged three times, but the forming time using the circulating electrolyte method amount to 5 hours, i.e. a quarter of the time needed for conventional forming.

Clearly, therefore, all the specified aims have been achieved by the forming method object of the invention.

In particular, it is worth emphasizing that forming the batteries while the two acids are kept at constant concentration and temperature all the time the acids are circulating not only reduces the forming time, but also achieves a substantially constant quality of the batteries, which all feature the same charge and the same chemical transformation of the cells comprising each battery.

## Claims

1. Method for forming lead-acid batteries (2), each of said batteries being complete with at least one positive pole terminal and at least one negative pole terminal, with at least one hole for the delivery and return of an electrolyte in circulation and a device suitable for maintaining the level of said circulating electrolyte constant, comprising the following steps:
- collecting a first electrolyte (7) from a first tank (5), through at least one first delivery pipe (13), at a given concentration and at a given temperature;
- distributing said first electrolyte (7) in said batteries through at least one distributor pipe (3) fitted with delivery pipes (310), each of which is connected to one of said batteries, each of said batteries being connected to return pipes (410) flowing into a collector pipe (4);
- circulating said first electrolyte (7) continuously and for a preset time, inside said batteries, said first electrolyte (7) entering and exiting through said one or more holes provided in said batteries or battery cells and returning to said first tank (5);
- powering said batteries with a direct current for a preset initial charging time while said first electrolyte (7) is circulating;
- stopping the circulation of said first electrolyte (7) from said first tank (5) to said batteries;
- circulating a second electrolyte (8) from a second tank (6) to said batteries for a further preset time, the concentration of said second electrolyte being different from that of the first electrolyte;
- powering said batteries with a direct current during the circulation of said second electrolyte (8) for a preset second charging time,
**characterized in that** checking means (20, 34) and controlling means (21, 36) are provided to keep constant the temperature of each of said first and of said second electrolyte during the circulation of them inside said batteries, and **in that** density control devices (22, 35) are provided to keep constant the concentration of said first and of said second electrolyte during the circulation of them inside said batteries.

2. Method according to claim 1), **characterized in that** the concentration of said first electrolyte (7) is lower than that of the second electrolyte (8) and the current intensity that powers said batteries during the circulation of the first electrolyte is greater than the currents intensity that powers the batteries during the circulation of the second electrolyte.

3. Method according to claim 1) or 2), **characterized in that** during the circulation of said first/second electrolyte (7, 8) in said batteries, the concentration of said first/second electrolyte in said first/second tank (5, 6) is kept constant by density control devices (22, 35).

4. Method according to claim 1), **characterized in that** said first electrotyte (7), which is less concentrated than the second electrolyte (8), is obtained from said second electrolyte (8) by diluting the latter with preferably demineralized water coming from a tank (24).

5. Method according to claim 1), **characterized in that** said second electrolyte (8) is obtained by diluting with water a third more concentrated electrolyte (39), whose density is greater than that of said first (7) and second electrolytes (8), said third electrolyte coming from a third tank (37).

6. Method according to claim 5), **characterized in that** said more concentrated electrolyte (39) contains alkaline hydroxide additives in order to produce, when combined with the sulfuric acid in said more concentrated electrolyte, enough alkaline sulfate to reduce the solubility of the lead sulfate produced In the battery during operation.

7. Method according to claim 1), **characterized in that** during the circulation of said first electrolyte (7) and said second electrolyte (8) in the batteries, the temperature of said first (7) or second electrolyte (8) is kept constant by sensors (20, 34) controlling one or more heat exchanger(s) (21, 36) suited to cool said first or second electrolyte.

8. Method according to claim 7), **characterized in that** said one or more heat exchanger(s) (21, 36) is placed between the piping departing from said first/second tank (5, 6) and said distributor pipes (3).

9. Method according to claim 1), **characterized in that** when said first/second electrolyte (7, 8) returns from the batteries being formed through said collector pipe (4), it passes through a liquid-gas separator (19, 33), so that the liquid part reaches the bottom of said first/second tank (5, 6) and the gaseous part reaches the top of said first/second tank (5, 6), said gaseous part being extracted by an electric fan (17) connected to said first/second tank by means of a duct (171).

10. Method according to claim 1), **characterized in that** the hydrogen developing during the battery forming process is diluted by the intake of air through openings (44) in each circulating electrolyte return pipe (410) attached to each battery, the gas-liquid mixture being separated downstream from the collector pipe (4) to which each return pipe (410) is connected.

11. Battery forming plant comprising at least a bench supporting a number of batteries to treat, each of said batteries being connected to positive and negative pole terminal and presenting at least one hole for connecting devices for the delivery and return of the circulating electrolyte, also comprising:
- a first tank (5) containing a first electrolyte (7), said first tank being connected to delivery piping (13, 9), to at least one pipe (3) for distributing the electrolyte to the batteries and to at least one pipe (4) for collecting said electrolyte, as well as to piping (12, 191) for the return of said first electrolyte;
- a second tank (6) containing a second electrolyte (8) that is more concentrated than the first electrolyte, said second tank being connected to delivery piping (101, 10), to at least one pipe (3) for the distribution of said second electrolyte and to at least one pipe (4) for the collection of said electrolyte, as well as to return piping (11, 332);
**characterized in that** it further comprises:
- means for checking (20, 34) and controlling (21, 36) the temperature of said first (7) and second electrolyte (8);
- density control devices (22, 35) for keeping constant the density of said first (7) and X second electrolyte (8);
- means for separating (19, 33) the gas from the electrolyte and for expelling said gas from said tanks and from said system piping.

12. Plant according to claim 11), **characterized in that** it has a third tank (37) containing a third electrolyte (39) that is more concentrated than the second electrolyte, with piping (16) connecting it to said second tank (6), said third tank being connected by means of piping and a pump (41) to a fourth tank (40) containing alkaline hydroxide.

13. Plant according to claim 11), **characterized in that** said first (5) and said second tank (6) communicate via piping with a tank containing demineralized water (24) for maintaining the concentration of said first (7) and second electrolyte (8) constant.

14. Plant according to claim 11), **characterized in that** said checking means for checking the temperature of said first and said second electrolyte are temperature sensors (20, 34) suitable for operating said controlling means (21, 36).

15. Plant according to claim 14), **characterized in that** said controlling means are one or more heat exchangers (21, 36).

16. Plant according to claim 15), **characterized in that** the heat exchangers are two, one (21) for keeping constant the temperature of said first electrolyte, the other (36) for keeping constant the temperature of said second electrolyte.

17. Plant according to claim 11), **characterized in that** the means for separating the gas from the electrolyte comprise at least one liquid-gas separator (19,33) with one pipe for the delivery of the mixture and two separate pipes (131, 331; 132, 332) for returning the liquid and the gas to said first (5) or said second tank (6)..

18. Plant according to claim 11), **characterized in that** said density control devices of said first (7) and said second electrolyte (8) are densimeters (22, 35) that control the delivery of water from a tank (24) in order to keep the concentration of the electrolyte constant.

19. Plant according to claim 11), **characterized in that** the means for separating and for expelling the gas from the circulating electrolyte is an electric fan (17) connected on the intake with piping (171) communicating with said first (5) and said second tank (6), said electric fan being complete with a device (170) of known type suitable for determining the concentration of the gas in the air and stopping said plant if a given concentration threshold is exceeded.

## Patentansprüche

1. Verfahren zum Bilden von Blei-Säure-Batterien (2), wobei jede Batterie mit zumindest einer positiven Polklemme und zumindest einer negativen Polklemme, mit zumindest einem Loch für die Zu- und Rückführung eines zirkulierenden Elektrolyten und einer Vorrichtung, die dazu geeignet ist, den Pegel des zirkulierenden Elektrolyten konstant zu halten, ausgestattet ist, umfassend die folgenden Schritte:
- das Sammeln eines ersten Elektrolyten (7) aus einem ersten Tank (5) durch zumindest eine erste Zuführungsleitung (13) mit einer gegebenen Konzentration und einer gegebenen Temperatur;
- das Verteilen des ersten Elektrolyten (7) in den Batterien durch zumindest eine Verteilerleitung (3), die mit Zuführungsleitungen (310) ausgestattet ist, die jeweils mit einer der Batterien verbunden sind, wobei jede der Batterien mit Rückführungsleitungen (410) verbunden ist, die in eine Sammelleitung (4) eingehen;
- das kontinuierliche Zirkulierenlassen des ersten Elektrolyten (7) für einen vorbestimmten Zeitraum im Inneren der Batterien, wobei der erste Elektrolyt (7) durch das eine oder die mehreren Löcher, die in den Batterien oder Batteriezellen bereitgestellt sind, ein- und austritt und zum ersten Tank (5) zurückgeführt wird;
- das Versorgen der Batterien mit einem Gleichstrom für einen vorbestimmten Anfangsladezeitraum, während der erste Elektrolyt (7) zirkuliert;
- das Stoppen der Zirkulation des ersten Elektrolyten (7) aus dem ersten Tank (5) zu den Batterien;
- das Zirkulierenlassen eines zweiten Elektrolyten (8) für einen weiteren vorbestimmten Zeitraum aus einem zweiten Tank (6) zu den Batterien, wobei die Konzentration des zweiten Elektrolyten anders als jene des ersten Elektrolyten ist;
- das Versorgen der Batterien mit einem Gleichstrom für einen zweiten vorbestimmten Ladezeitraum, während der zweite Elektrolyt (8) zirkuliert,
**dadurch gekennzeichnet, dass** Prüfmittel (20, 34) und Regelungsmittel (21, 36) bereitgestellt sind, um die Temperatur des ersten und des zweiten Elektrolyten während der Zirkulation dieser im Inneren der Batterien konstant zu halten, und dass Dichteregelungsvorrichtungen (22, 35) bereitgestellt sind, um die Konzentration des ersten und des zweiten Elektrolyten während der Zirkulation dieser im Inneren der Batterien konstant zu halten.

2. Verfahren nach Anspruch 1), **dadurch gekennzeichnet, dass** die Konzentration des ersten Elektrolyten (7) niedriger als die Konzentration des zweiten Elektrolyten (8) ist und die Stromstärke, mit der die Batterien während der Zirkulation des ersten Elektrolyten versorgt werden, größer als die Stromstärke, mit der die Batterien während der Zirkulation des zweiten Elektrolyten versorgt werden, ist.

3. Verfahren nach Anspruch 1) oder 2), **dadurch gekennzeichnet, dass** während der Zirkulation des ersten/zweiten Elektrolyten (7, 8) in den Batterien die Konzentration des ersten/zweiten Elektrolyten im ersten/zweiten Tank (5, 6) durch Dichteregelungsvorrichtungen (22, 35) konstant gehalten wird.

4. Verfahren nach Anspruch 1), **dadurch gekennzeichnet, dass** der erste Elektrolyt (7), der weniger konzentriert als der zweite Elektrolyt (8) ist, erhalten wird, indem Letzterer (8) mit vorzugsweise entmineralisiertem Wasser, das aus einem Tank (24) kommt, verdünnt wird.

5. Verfahren nach Anspruch 1), **dadurch gekennzeichnet, dass** der zweite Elektrolyt (8) erhalten wird, indem ein dritter, höher konzentrierter Elektrolyt (39), dessen Dichte größer als jene des ersten (7) und des zweiten Elektrolyten (8) ist, mit Wasser verdünnt wird, wobei der dritte Elektrolyt aus einem dritten Tank (37) kommt.

6. Verfahren nach Anspruch 5), **dadurch gekennzeichnet, dass** der höher konzentrierte Elektrolyt (39) Alkalihydroxide als Additive enthält, um bei der Kombination mit der Schwefelsäure im höher konzentrierten Elektrolyten ausreichend Alkalisulfat zu bilden, um die Löslichkeit des Bleisulfats, das während des Betriebs in der Batterie gebildet wird, zu senken.

7. Verfahren nach Anspruch 1), **dadurch gekennzeichnet, dass** während der Zirkulation des ersten Elektrolyten (7) und des zweiten Elektrolyten (8) in den Batterien die Temperatur des ersten (7) oder des zweiten Elektrolyten (8) durch Sensoren (20, 34) konstant gehalten wird, die einen oder mehrere Wärmetauscher (21, 36) steuern, die dazu geeignet sind, den ersten oder den zweiten Elektrolyten zu kühlen.

8. Verfahren nach Anspruch 7), **dadurch gekennzeichnet, dass** der eine oder die mehreren Wärmetauscher (21, 36) zwischen der Leitungsanordnung, die vom ersten/zweiten Tank (5, 6) ausgeht, und den Verteilerleitungen (3) angeordnet ist/sind.

9. Verfahren nach Anspruch 1), **dadurch gekennzeichnet, dass** der erste/zweite Elektrolyt (7, 8) beim Zurückkehren von den zu bildenden Batterien durch das Sammelrohr (4) durch einen Flüssigkeit-Gas-Separator (19, 33) hindurch tritt, sodass der flüssige Teil den unteren Bereich des ersten/zweiten Tanks (5, 6) erreicht und der gasförmige Teil den oberen Bereich des ersten/zweiten Tanks (5, 6) erreicht, wobei der gasförmige Teil von einem Elektrolüfter (17) abgesaugt wird, der über einen Kanal (171) mit dem ersten/zweiten Tank verbunden ist.

10. Verfahren nach Anspruch 1), **dadurch gekennzeichnet, dass** der Wasserstoff, der sich während des Batteriebildungsvorgangs entwickelt, durch den Einlass von Luft durch Öffnungen (44) in jeder Rückführungsleitung (410) für zirkulierende Elektrolyten, die an jeder Batterie angebracht ist, verdünnt wird, wobei das Flüssigkeit-Gas-Gemisch stromabwärts der Sammelleitung (4), mit der jede Rückführungsleitung (410) verbunden ist, getrennt wird.

11. Batteriebildungsanlage, umfassend zumindest eine Bank, die mehrere zu behandelnde Batterien trägt, wobei jede der Batterien mit positiven und negativen Polklemmen verbunden ist und zumindest ein Loch zum Verbinden mit Vorrichtungen zur Zu- und Rückführung des zirkulierenden Elektrolyten aufweist, ferner umfassend:
- einen ersten Tank (5), der einen ersten Elektrolyten (7) enthält, wobei der erste Tank mit einer Zuführungsleitungsanordnung (13, 9), mit zumindest einer Leitung (3) zum Verteilen des Elektrolyten auf die Batterien und mit zumindest einer Leitung (4) zum Sammeln des Elektrolyten sowie mit einer Leitungsanordnung (12, 191) zur Rückführung des ersten Elektrolyten verbunden ist;
- einen zweiten Tank (6), der einen zweiten Elektrolyten (8), der höher konzentriert ist als der erste Elektrolyt, enthält, wobei der zweite Tank mit einer Zuführungsleitungsanordnung (101, 10), mit zumindest einer Leitung (3) zum Verteilen des zweiten Elektrolyten und mit zumindest einer Leitung (4) zum Sammeln des Elektrolyten sowie mit einer Rückführungsleitungsanordnung (11, 332) verbunden ist;
**dadurch gekennzeichnet, dass** sie ferner Folgendes umfasst:
- Mittel zum Prüfen (20, 34) und Regeln (21, 36) der Temperatur des ersten (7) und zweiten Elektrolyten (8);
- Dichteregelungsvorrichtungen (22, 35), um die Dichte des ersten (7) und zweiten Elektrolyten (8) konstant zu halten;
- Mittel zum Trennen (19, 33) des Gases vom Elektrolyten und zum Ausstoßen des Gases aus den Tanks und aus der Leitungsanordnung des Systems.

12. Anlage nach Anspruch 11), **dadurch gekennzeichnet, dass** sie einen dritten Tank (37) aufweist, der einen dritten Elektrolyten (39), der höher konzentriert ist als der zweite Elektrolyt, enthält und über eine Leitungsanordnung (16) mit dem zweiten Tank (6) verbunden ist, wobei der dritte Tank über eine Leitungsanordnung und eine Pumpe (41) mit einem vierten Tank (40) verbunden ist, der Alkalihydroxide enthält.

13. Anlage nach Anspruch 11), **dadurch gekennzeichnet, dass** der erste (5) und der zweite Tank (6) über eine Leitungsanordnung mit einem Tank kommunizieren, der entmineralisiertes Wasser (24) enthält, um die Konzentration des ersten (7) und des zweiten Elektrolyten (8) konstant zu halten.

14. Anlage nach Anspruch 11), **dadurch gekennzeichnet, dass** die Prüfmittel zum Prüfen der Temperatur des ersten und des zweiten Elektrolyten Temperatursensoren (20, 34) sind, die dazu geeignet sind, die Regelungsmittel (21, 36) zu betätigen.

15. Anlage nach Anspruch 14), **dadurch gekennzeichnet, dass** die Regelungsmittel einen oder mehrere Wärmetauscher (21, 36) sind.

16. Anlage nach Anspruch 15), **dadurch gekennzeichnet, dass** die Wärmetauscher zwei sind, wobei einer (21) dazu dient, die Temperatur des ersten Elektrolyten konstant zu halten, und der andere (36) dazu dient, die Temperatur des zweiten Elektrolyten konstant zu halten.

17. Anlage nach Anspruch 11), **dadurch gekennzeichnet, dass** die Mittel zum Trennen des Gases vom Elektrolyten mindestens einen Flüssigkeit-Gas-Separator (19, 33) mit einer Leitung zur Zuführung des Gemischs und zwei getrennten Leitungen (131, 331; 132, 332) zur Rückführung der Flüssigkeit und des Gases zum ersten (5) oder zum zweiten Tank (6) umfassen.

18. Anlage nach Anspruch 11), **dadurch gekennzeichnet, dass** die Dichteregelungsvorrichtungen für den ersten (7) und den zweiten Elektrolyten (8) Dichtemesser (22, 35) sind, die die Zuführung von Wasser aus einem Tank (24) regeln, um die Konzentration des Elektrolyten konstant zu halten.

19. Anlage nach Anspruch 11), **dadurch gekennzeichnet, dass** das Mittel zum Trennen und zum Ausstoßen des Gases aus dem zirkulierenden Elektrolyten ein Elektrolüfter (17) ist, der an der Eingangsseite mit einer Leitungsanordnung (171) verbunden ist, die mit dem ersten (5) und dem zweiten Tank (6) kommuniziert, wobei der Elektrolüfter mit einer Vorrichtung (170) bekannten Typs ausgestattet ist, die dazu geeignet ist, die Konzentration des Gases in der Luft zu bestimmen und die Anlage zu stoppen, wenn ein gegebener Konzentrationsschwellenwert überschritten ist.

## Revendications

1. Méthode pour la formation de batteries (2) au plomb-acide, chacune desdites batteries étant dotée d'au moins une borne avec pôle positif et au moins une borne avec pôle négatif, avec au moins un trou pour le refoulement et le retour de l'électrolyte en circulation et un dispositif indiqué pour maintenir constant le niveau dudit électrolyte, comprenant les phases suivantes:
- prélèvement du premier électrolyte (7) d'un premier réservoir (5), au moyen d'au moins un tuyau de refoulement (13), à une concentration donnée et à une température donnée;
- distribution dudit premier électrolyte (7) dans lesdites batteries au moyen d'au moins un tuyau de distribution (3) équipé de tuyaux de refoulement (310), chacun de ceux-ci est relié à une desdites batteries, chacune desdites batteries étant reliée à des tuyaux de retour (410) s'écoulant dans un tuyau collecteur (4);
- circulation dudit premier électrolyte (7) de manière continue et pendant un temps préétabli, à l'intérieur desdites batteries, ledit premier électrolyte (7) entrant et sortant à travers desdits un ou plusieurs trous prévus sur lesdites batteries ou éléments de batterie et revenant audit premier réservoir (5);
- alimentation desdites batteries avec du courant continu pendant un temps de charge initiale préétabli alors que ledit premier électrolyte (7) est en train de circuler;
- arrêt de la circulation dudit premier électrolyte (7) dudit premier réservoir (5) auxdites batteries;
- circulation d'un deuxième électrolyte (8) d'un deuxième réservoir (6) auxdites batteries pendant un temps préétabli ultérieur, la concentration dudit deuxième électrolyte étant différente de celle du premier électrolyte;
- alimentation desdites batteries avec du courant continu durant la circulation dudit deuxième électrolyte (8) pendant un deuxième temps de charge préétabli,
**caractérisée en ce que** des moyens de contrôle (20, 34) et des moyens de commande (21, 36) sont aptes à maintenir constante la température de chacune desdits premier et deuxième électrolytes pendant leur circulation à l'intérieur desdites batteries, et **en ce que** les dispositifs de contrôle de la densité (22, 35) sont indiqués pour maintenir constante la concentration desdits premier et deuxième électrolytes pendant leur circulation à l'intérieur desdites batteries.

2. Méthode selon la revendication 1), **caractérisée en ce que** la concentration dudit premier électrolyte (7) est inférieure à celle du deuxième électrolyte (8) et que l'intensité de courant qui alimente lesdites batteries durant la circulation dudit premier électrolyte est plus grande que l'intensité de courant qui alimente les batteries durant la circulation du deuxième électrolyte.

3. Méthode selon la revendication 1) ou 2), **caractérisée en ce que** durant la circulation dudit premier/deuxième électrolyte (7, 8) dans lesdites batteries, la concentration dudit premier/deuxième électrolyte dans ledit premier/deuxième réservoir (5, 6) est maintenue constante par des dispositifs de contrôle de la densité (22, 35).

4. Méthode selon la revendication 1), **caractérisée en ce que** ledit premier électrolyte (7), qui est moins concentré que le deuxième électrolyte (8), est obtenu dudit deuxième électrolyte (8) en diluant ce dernier avec de l'eau de préférence déminéralisée s'écoulant d'un réservoir (24).

5. Méthode selon la revendication 1), **caractérisée en ce que** ledit deuxième électrolyte (8) est obtenu en diluant avec de l'eau un troisième électrolyte plus concentré (39), dont la densité est plus grande que celle desdits premier (7) et deuxième électrolytes (8), ledit troisième électrolyte s'écoulant d'un troisième réservoir (37).

6. Méthode selon la revendication 5), **caractérisée en ce que** ledit électrolyte plus concentré (39) contient des additifs d'hydroxydes alcalins pour produire, quand combiné avec de l'acide sulfurique dans ledit électrolyte plus concentré, du sulfate alcalin suffisant pour réduire la solubilité du sulfate de plomb produit dans la batterie durant le fonctionnement.

7. Méthode selon la revendication 1), **caractérisée en ce que** durant la circulation dudit premier électrolyte (7) et dudit deuxième électrolyte (8) dans les batteries, la température dudit premier (7) ou deuxième électrolyte (8) est maintenue constante par des capteurs (20, 34) contrôlant un ou plusieurs échangeur(s) de chaleur (21, 36) indiqués pour refroidir ledit premier ou deuxième électrolyte.

8. Méthode selon la revendication 7), **caractérisée en ce que** ledit un ou plusieurs échangeur(s) de chaleur (21, 36) sont positionnés entre le système de tuyaux sortant dudit premier/deuxième réservoir (5, 6) et lesdits tuyaux de distribution (3).

9. Méthode selon la revendication 1), **caractérisée en ce que** quand ledit premier/deuxième électrolyte (7, 8) revient des batteries étant formées passant à travers dudit tuyau collecteur (4), il passe à travers un séparateur de liquide-gaz (19, 33), de façon à ce que la partie de liquide atteint le fond dudit premier/deuxième réservoir (5, 6) et la partie gazeuse atteint le sommet dudit premier/deuxième réservoir (5, 6), ladite partie gazeuse étant extraite d'un ventilateur électrique (17) relié audit premier/deuxième réservoir au moyen d'un conduit (171).

10. Méthode selon la revendication 1), **caractérisée en ce que** l'hydrogène développé durant le processus de formation de la batterie est dilué par l'admission d'air à travers des ouvertures (44) dans chaque tuyau de retour (410) de l'électrolyte de circulation relié à chaque batterie, le mélange de liquide-gaz étant séparé en aval du tuyau collecteur (4) auquel chaque tuyau de retour (410) est relié.

11. Installation de formation de batterie comprenant au moins un établi supportant un nombre de batteries à traiter, chacune desdites batteries étant reliée à des bornes avec pôles positif et négatif et présentant au moins un trou pour la connexion de dispositifs pour le refoulement et le retour de l'électrolyte circulant, comprenant en outre:
- un premier réservoir (5) contenant un premier électrolyte (7), ledit premier réservoir étant relié à un système de tuyaux de refoulement (13, 9), à au moins un tuyau (3) pour la distribution de l'électrolyte aux batteries et au moins un tuyau (4) pour prélever ledit électrolyte, ainsi qu'à un système de tuyaux (12, 191) pour le retour dudit premier électrolyte;
- un deuxième réservoir (6) contenant un deuxième électrolyte (8) qui est plus concentré que le premier électrolyte, ledit deuxième réservoir étant relié à un système de tuyaux de refoulement (101, 10), à au moins un tuyau (3) pour la distribution dudit deuxième électrolyte et à au moins un tuyau (4) pour le prélèvement dudit électrolyte, ainsi qu'à un système de tuyaux de retour (11, 332);
**caractérisée en ce qu'**elle comprend en outre:
- des moyens de contrôle (20, 34) et de commande (21, 36) de la température dudit premier (7) et dudit deuxième électrolyte (8);
- des dispositifs de contrôle de la densité (22, 35) aptes à maintenir constante la densité dudit premier (7) et dudit deuxième électrolyte (8);
- des moyens aptes à séparer (19, 33) le gaz de l'électrolyte et pour expulser ledit gaz desdits réservoirs et dudit système de tuyaux.

12. Installation selon la revendication 11), **caractérisée en ce qu'**elle présente un troisième réservoir (37) contenant un troisième électrolyte (39) qui est plus concentré que le deuxième électrolyte, avec un système de tuyaux (16) reliant celui-ci audit deuxième réservoir (6), ledit troisième réservoir étant relié par un système de tuyaux et par une pompe (41) à un quatrième réservoir (40) contenant des hydroxydes alcalins.

13. Installation selon la revendication 11), **caractérisée en ce que** ledit premier (5) et ledit deuxième réservoir (6) communiquent à travers d'un système de tuyaux avec un réservoir contenant de l'eau déminéralisée (24) pour maintenir constante la concentration dudit premier (7) et dudit deuxième électrolyte (8).

14. Installation selon la revendication 11), **caractérisée en ce que** lesdits moyens de contrôle aptes à contrôler la température dudit premier et dudit deuxième électrolyte sont des capteurs de température (20, 34) indiqués pour faire fonctionner lesdits moyens de commande (21, 36).

15. Installation selon la revendication 14), **caractérisée en ce que** ledits moyens de commande sont un ou plusieurs échangeurs de chaleur (21, 36).

16. Installation selon la revendication 15), **caractérisée en ce que** les échangeurs de chaleur sont deux, l'un (21) pour maintenir constante la température dudit premier électrolyte, l'autre (36) pour maintenir constante la température dudit deuxième électrolyte.

17. Installation selon la revendication 11), **caractérisée en ce que** les moyens indiqués pour la séparation du gaz de l'électrolyte comprennent au moins un séparateur liquide-gaz (19, 33) avec un tuyau pour le refoulement du mélange et deux tuyaux séparés (131, 331; 132, 332) pour le retour du liquide et du gaz dans ledit premier (5) ou ledit deuxième réservoir (6).

18. Installation selon la revendication 11), **caractérisée en ce que** lesdits dispositifs de contrôle de la densité dudit premier (7) et dudit deuxième électrolyte (8) sont des densimètres (22, 35) qui contrôlent le refoulement de l'eau d'un réservoir (24) afin de maintenir constante la concentration de l'électrolyte.

19. Installation selon la revendication 11), **caractérisée en ce que** les moyens indiqués pour la séparation et pour l'élimination du gaz de l'électrolyte circulant est un ventilateur électrique (17) relié sur le côté d'admission avec un système de tuyaux (171) communiquant avec ledit premier (5) et ledit deuxième réservoir (6), ledit ventilateur électrique étant muni d'un dispositif (170) du type connu indiqué pour déterminer la concentration de gaz dans l'air et pour arrêter ladite installation si un seuil de concentration donné est dépassé.
